# EUROPÄISCHE PATENTSCHRIFT

(11) **EP 2 125 467 B1**
(45) Veröffentlichungstag und Bekanntmachung des Hinweises auf die Patenterteilung: **22.05.2013**
(21) Anmeldenummer: 07857407.6
(22) Anmeldetag: 11.12.2007
(51) Int. Cl.: B60T 11/22, B60T 17/04

(54) **AUSGLEICHSBEHÄLTER FÜR EINE HYDRAULISCHE KRAFTFAHRZEUGBREMSANLAGE**
EQUALIZING CONTAINER FOR A HYDRAULIC MOTOR VEHICLE BRAKE SYSTEM
RÉSERVOIR DE COMPENSATION POUR UN SYSTÈME HYDRAULIQUE DE FREINAGE DE VÉHICULE AUTOMOBILE

(30) Priorität: 13.12.2006 DE 102006058670; 02.06.2007 DE 102007025826
(43) Veröffentlichungstag der Anmeldung: 02.12.2009
(73) Patentinhaber: Continental Teves AG & Co. OHG, 60488 Frankfurt (DE)
(72) Erfinder: LUDWIG, Johann, 61449 Steinbach (DE); NEUMANN, Hans-Jürgen, 65428 Rüsselsheim (DE); OTTMANN, Swen, 60488 Frankfurt/M (DE); SCHIEL, Christoph, 61231 Bad Nauheim (DE); TANDLER, Peter, 61476 Kronberg/Ts. (DE); KREBS, Werner, 65582 Hambach (DE); SCHMIDT, Barbara, 65929 Frankfurt (DE)
(86) Internationale Anmeldenummer: PCT/EP2007/063720
(87) Internationale Veröffentlichungsnummer: WO 2008/071708

(56) Entgegenhaltungen:
- WO-A-2005/024414
- DE-A1- 3 716 135
- DE-A1- 10 239 126
- GB-A- 2 202 913
- US-A- 4 926 015

## Beschreibung

Die Erfindung betrifft einen Ausgleichsbehälter für eine hydraulische Kraftfahrzeugbremsanlage mit einem Gehäuse umfassend ein Gehäuseoberteil und ein Gehäuseunterteil und mit einer Vorrichtung zum Überwachen des Behälterfüllstandes des Ausgleichsbehälters umfassend eine am Gehäuse befestigte Schalteinheit mit einem Steckverbinder und einem Kontaktträger, welcher mit einem Abschnitt in ein Führungsrohr hineinragt, das sich in einen Behälterinnenraum erstreckt, sowie ein Sensor- oder Schaltelement, welches am Kontaktträger im Bereich des Führungsrohrs angeordnet ist und das mittels eines Gebers in einem Schaltpunkt, an welchem die Schalteinheit ein Signal für eine elektronische Steuereinheit generiert, schaltbar ist.

In einer hydraulischen Kraftfahrzeugbremsanlage befindet sich die benötigte Bremsflüssigkeit in dem Ausgleichsbehälter, wobei die Vorrichtung zum Überwachen des Behälterfüllstandes als Schaltelement beispielsweise einen Reed-Schalter mit einem Reed-Kontakt und als Geber beispielsweise einen magnetischen Geber aufweist. Senkt sich der Bremsflüssigkeitsstand und passiert der magnetische Geber den Schaltpunkt, so schließen sich die Schaltkontakte des Reed-Schalters. Dieses Signal wird in einem Steuergerät ausgewertet und der Fahrer des Kraftfahrzeuges kann durch eine optische und/oder akustische Anzeige gewarnt werden. Dabei muss sichergestellt sein, dass der Ausgleichsbehälter immer mit einem Minimum an Bremsflüssigkeit gefüllt ist, um die Funktion der Bremsanlage nicht in Frage zu stellen. In der Regel werden Vorrichtungen zum Überwachen des Behälterfüllstandes verwendet, bei denen ein mit einem Magneten versehener Schwimmer den Reed-Kontakt schaltet, sobald der Schwimmer eine Lage (Schaltpunkt) einnimmt, in der der Behälterfüllstand ein definiertes Minimum unterschreitet. Durch den Reed-Kontakt wird ein für den Fahrer erkennbares Warnsignal ausgelöst, wobei dann geeignete Gegenmaßnahmen einzuleiten sind.

Ein gattungsgemäßer Ausgleichsbehälter ist beispielsweise aus der DE 37 16 135 A1 oder der DE 35 24 281 A1 bekannt. Am Kontaktträger des bekannten Ausgleichsbehälters ist eine Fahne befestigt, die sich parallel zur Längsachse des Führungsrohrs erstreckt und in einen inneren Schlitz eines Radialvorsprunges des Führungsrohres hineinragt, um in einer vorgegebenen Position an Vorsprüngen des Führungsrohres befestigt zu werden. Der Steckverbinder der Schalteinheit ist in einem Steckverbindergehäuse vorgesehen, welches mit einer von dem Gehäuseoberteil hervorstehenden Seitenwand verschweißt ist. Dies bedingt zum einen eine äußerst aufwendige Montage. Zum anderen ist die Schalteinheit dadurch nicht austauschbar, so dass im Fall eines Defektes der komplette Ausgleichsbehälter ausgetauscht werden muss.
Weitere Nachteile bestehen in Hinblick auf Packaging und Transport des bekannten Ausgleichsbehälters, da die Schalteinheit von der Oberseite des Ausgleichsbehälters hervorsteht.

Daher ist es Aufgabe der Erfindung, einen Ausgleichsbehälter bereitzustellen, welcher hinsichtlich Montage und Kosten, Schaltverhalten und Austauschbarkeit der Schalteinheit verbessert ist.

Diese Aufgabe wird erfindungsgemäß dadurch gelöst, dass der Kontaktträger einen topfförmigen Abschnitt aufweist, welcher mit einem am Gehäuse ausgebildeten Komplementärabschnitt zusammenwirkt, um eine lösbare Verbindung der Schalteinheit mit dem Gehäuse zu ermöglichen, wobei sich der das Sensor- oder Schaltelement tragende Abschnitt des Kontaktträgers mittig von einem Boden des topfförmigen Abschnittes erstreckt und ein Gehäuse des Steckverbinders senkrecht in Bezug auf eine Längsachse der Schalteinheit an dem Kontaktträger angeordnet ist. Dadurch kann die Schalteinheit einfach und schnell am Gehäuse des Ausgleichsbehälters montiert werden und aufwendige Montageschritte können entfallen. Ferner erlaubt die lösbare Verbindung des topfförmigen Abschnittes des Kontaktträgers und des Komplementärabschnitts des Gehäuses eine genaue Positionierung des Sensor- oder Schaltelementes und damit eine exakte Positionierung des Schaltpunktes.

Eine separate Montage des Steckverbinders an den Ausgleichsbehälter kann dadurch entfallen, dass das Gehäuse des Steckverbinders an eine Wandung des topfförmigen Abschnittes angeformt ist.

Vorzugsweise ist der am Gehäuse ausgebildete Komplementärabschnitt als ringförmiger Vorsprung ausgebildet, innerhalb dessen das Führungsrohr vorgesehen ist, wobei das Führungsrohr und der ringförmige Vorsprung konzentrisch angeordnet sind. Dadurch kann die Montage der Schalteinheit wesentlich vereinfacht werden.

Eine besonders Packaging-optimierte Ausführung der Erfindung sieht vor, dass der ringförmige Vorsprung in einem Bereich des Gehäuses angeordnet ist, welcher im Vergleich zum restlichen Bereich des Gehäuses in Richtung Behälterinnenraum versetzt vorgesehen ist. Die Schalteinheit steht somit nicht über das Gehäuse hervor und kann weder beim Transport noch im eingebauten Zustand des Ausgleichsbehälters hinderlich sein.

Die lösbare Verbindung des Kontaktträgers mit dem Komplementärabschnitt ist vorzugsweise als Bajonettverbindung ausgestaltet, welche auf einer Innenseite des topfförmigen Abschnittes zwei diametral gegenüberliegende Ausbrüche mit Hinterscheidungen und auf einer Außenseite des ringförmigen Vorsprunges zwei diametral gegenüberliegende Rippen umfasst. Diese Verbindung erlaubt eine einfache Austauschbarkeit der Schalteinheit ohne die Notwendigkeit zur Werkzeugverwendung.

Vorzugsweise ist der ringförmige Vorsprung federnd ausgebildet und ein Rand des ringförmigen Vorsprunges liegt dichtend an der Innenseite des topfförmigen Abschnittes an. Diese Ausbildung des ringförmigen Vorsprunges bedingt eine Doppelfunktion des Vorsprunges, da der Vorsprung einerseits einen Innenraum des Führungsrohres gegen ein Eindringen von Spritzwasser schützt und andererseits die Ausbrüche gegen die Rippen der Bajonettverbindung drückt. Die Hinterschneidungen verhindern dabei ein ungewolltes Lösen der Schalteinheit.

Zur Verstärkung des Ausgleichsbehälters im Bereich des ringförmigen Vorsprunges sind vorzugsweise zwischen dem ringförmigen Vorsprung und dem Führungsrohr Verstärkungsrippen vorgesehen.

Eine einfache Herstellung der Schalteinheit kann dadurch erreicht werden, dass der Kontaktträger mit dem Steckverbinder einteilig aus Kunststoff ausgebildet ist. Die Kontaktfahnen sind hierzu gemäß einer vorteilhaften Ausführungsform der Erfindung in den Kontaktträger eingespritzt vorgesehen.

Eine kostengünstige Ausführung der Erfindung sieht vor, dass das Sensor- oder Schaltelement ein Reed-Schalter ist.

Gemäß vorteilhaften Ausführungsformen kann der Reed-Schalter an Kontaktfahnen befestigt und in einer Ausnehmung des Kontaktträgers aufgenommen sein oder der Reed-Schalter ist an einer Leiterplatte befestigt, welche am Kontaktträger angeordnet ist.

Der Reed-Schalter kann insbesondere während des Transportes geschützt werden, indem der Reed-Schalter in das Material des Kontaktträgers eingebettet vorgesehen ist.

Alternativ können die Leiterplatte sowie ein Teil des Kontaktträgers von einer röhrförmigen Hülle umgeben sein, deren Flansch im Bereich des Bodens des topfförmigen Abschnittes an dem Kontaktträger angeschweißt ist. Die Hülle ist einfach herstellbar und ohne großen Aufwand am Kontaktträger zu befestigen.

Eine weitere vorteilhafte Ausführungsform der Erfindung sieht vor, dass Mittel zur Vermeidung einer fehlerhaften Montage der Schalteinheit vorgesehen sind. Dadurch können eine fehlerhafte Montage der Schalteinheit sowie eine dadurch bedingte Beschädigung der Bauteile ausgeschlossen werden.

Vorzugsweise sind die Mittel als Ausnehmung im Gehäuse und als Rippe an der Schalteinheit vorgesehen, wobei die Ausnehmung im Bereich des Führungsrohres (83) angeordnet ist und sich die Rippe vom Boden des topfförmigen Abschnittes entlang des Kontaktträgers erstreckt. So kann beispielsweise ausgeschlossen werden, dass eine rechtseindrehende Schalteinheit in ein Gehäuse montiert wird, welches für eine linksdrehende Schalteinheit ausgelegt ist. Ferner kann eine Montage der Schalteinheit in einer falschen Position vermieden werden.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausführungsformen zeigt. Dabei zeigt jeweils stark schematisiert sowie teilweise im Schnitt:
- Figur 1: einen bekannten Ausgleichsbehälter im Längsschnitt;
- Figur 2: eine Schalteinheit eines ersten Ausführungsbeispiels eines erfindungsgemäßen Ausgleichsbehälters in Vorderansicht;
- Figur 3: die Schalteinheit gemäß Fig. 2 teilweise geschnitten in Seitenansicht;
- Figur 4: einen Ausschnitt des erfindungsgemäßen Ausgleichsbehälters gemäß Fig. 2 teilweise geschnitten;
- Figur 5: eine räumliche Darstellung des erfindungsgemäßen Ausgleichsbehälters gemäß Fig. 2;
- Figur 6: einen Ausschnitt des erfindungsgemäßen Ausgleichsbehälters gemäß Fig. 2;
- Figur 7: einen Ausschnitt der Schalteinheit gemäß Fig. 2 und 3 im Schnitt;
- Figur 8: eine räumliche Darstellung der Schalteinheit gemäß Fig. 2 und 3;
- Figur 9: eine alternative Ausführung einer Schalteinheit eines zweiten Ausführungsbeispiels eines erfindungsgemäßen Ausgleichsbehälters im Schnitt;
- Figur 10: eine Schalteinheit eines dritten Ausführungsbeispiels eines erfindungsgemäßen Ausgleichsbehälters in Vorderansicht;
- Figur 11: die Schalteinheit gemäß Fig. 10 im Schnitt entlang der Linie A-A;
- Figur 12: die Schalteinheit gemäß Fig. 10 im Schnitt entlang der Linie;
- Figur 13: einen Ausschnitt des dritten Ausführungsbeispiels eines erfindungsgemäßen Ausgleichsbehälters und
- Figur 14: einen Ausschnitt des erfindungsgemäßen Ausgleichsbehälters gemäß Fig. 13 im Schnitt.

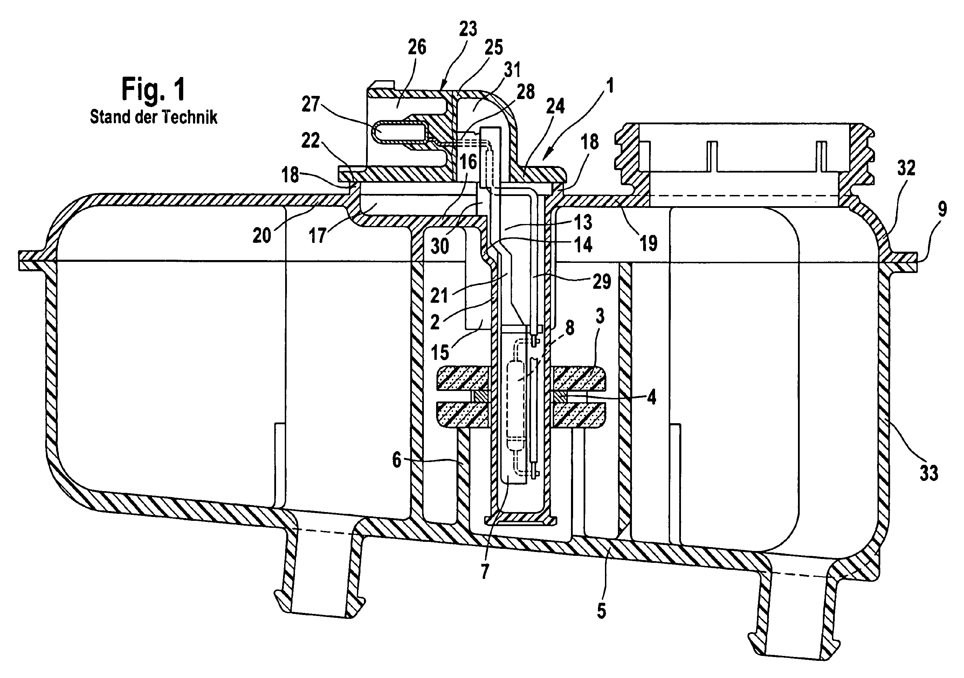

Fig. 1 zeigt einen bekannten Ausgleichsbehälter 1 für Bremsflüssigkeit gemäß der DE 37 16 135 A1 mit einer Vorrichtung zur Überwachung des Behälterfüllstandes. Der Ausgleichsbehälter 1 ist beispielsweise an einem nicht dargestellten Hauptzylinder einer Fahrzeugbremsanlage befestigt und weist ein in sein Inneres ragendes Führungsrohr 2 auf, das an seinem, dem Behälterinneren zugewandten Ende verschlossen ist. Längs des Führungsrohres 2, das beispielsweise einen kreisförmigen Querschnitt hat, ist ein Schwimmer 3 verschiebbar angeordnet, der z.B. als Ring ausgebildet ist und einen Bestandteil einer Vorrichtung zum Überwachen des Behälterfüllstandes darstellt. Der Schwimmer 3 trägt einen ringförmigen Magneten 4 als magnetischen Geber. Ein vom Boden 5 des Ausgleichsbehälters 1 emporragender, das Führungsrohr 2 teilweise konzentrisch umgebender Rohrstutzen 6 ist als Anschlag für den Schwimmer 3 vorgesehen. Dieser Anschlag legt die tiefste Stellung des Schwimmers 3 im Ausgleichsbehälter 1 fest und verhindert, dass der Schwimmer 3 das Führungsrohr 2 verlassen kann. Bekannte Maßnahmen zur Schwimmersicherung sind auch am Ende des Führungsrohres 2 angeordnete Spreizelemente.

Die Vorrichtung zum Überwachen des Behälterfüllstandes umfasst eine Schalteinheit mit einem Deckel 23 sowie einen Kontaktträger 7, welcher im Inneren des Führungsrohrs 2 vorgesehen ist und an dem ein Reed-Schalter 8 als Schaltelement befestigt ist. Sobald der Magnet 4 durch Absinken des Behälterfüllstandes einen Schaltpunkt S des Schaltelementes passiert, schließt bzw. öffnet der Reed-Kontakt des Reed-Schalters 8 und es wird ein Signal für eine elektronische Schalteinheit der Kraftfahrzeugbremsanlage generiert. Am Kontaktträger 7 ist eine Fahne 21 befestigt, die sich parallel zur Längsachse des Führungsrohrs 2 erstreckt und in einen inneren Schlitz 13 eines Radialvorsprunges 14 des Führungsrohres 2 hineinragt. Das Führungsrohr 2 ist mit mehreren an seiner Oberfläche symmetrisch gegeneinander versetzt angeordneten Rippen 15 versehen, die den oberen Anschlag für den Schwimmer 3 bilden.
An seinem oberen Ende geht das Führungsrohr 2 in einen Boden 16 eines flachen Hohlraumes 17 über, dessen Seitenwände 18 mit Wänden 19 und 20 des Ausgleichsbehälters 1 verbunden sind. Die Seitenwände 18 überragen die Wände 19, 20 des Ausgleichsbehälters 1 um ein geringes Stück und bilden mit ihren oberen Rändern 22 Anschlagflächen für den Deckel 23, der eine ebene Grundplatte 24 enthält, von der ein Steckverbindergehäuse 25 empor ragt, das mit den Seitenwänden 18 verschweißt vorgesehen ist. Das Steckverbindergehäuse 25 ist mit einer Ausnehmung 26 versehen, in die zwei Kontaktstifte 27 oder Messerkontakte eines Steckverbinders hineinragen, der mit einem Ende in das Steckerverbindergehäuse 25 gas- bzw. flüssigkeitsdicht eingesetzt ist. Das der Ausnehmung 26 entgegengesetzte Ende 28 eines jeden Kontaktstiftes 27 ist mit dem Ende einer elektrischen Leitung 29 verbunden. Die anderen Enden der elektrischen Leitungen 29 sind an dem Reed-Schalter 8 angeschlossen.

In den Hohlraum 17 ragen zwei, die Wände auf einander gegenüberliegenden Seiten des Schlitzes 13 ein Stück fortsetzende Vorsprünge 30, die beispielsweise nicht höher sind als die Seitenwände 18. Die Fahne 21 erstreckt sich in dem Raum zwischen den Vorsprüngen 30 und ist mittels geeigneten Verfahren (z.B. Kleben, Schweißen, Anschrauben, Anpressen) mit diesen verbunden. Im Steckverbindergehäuse 25 ist in dem über den Vorsprüngen 30 liegenden Teil eine Ausnehmung 31 vorgesehen, in die das Ende der Fahne 21 und ggf. die Vorsprünge 30 hineinragen können, wenn der Deckel 23 den Hohlraum 17 verschließt. Der Ausgleichsbehälter 1 besteht aus einem Gehäuse umfassend einen Gehäuseoberteil 32 und einen Gehäuseunterteil 33, welche an ihren Rändern 9 miteinander verschweißt sind.

Der Schwimmer 3 der Vorrichtung zur Überwachung des Behälterfüllstandes ist einstückig vorgesehen und weist eine radiale Aussparung auf, in welche der ringförmige Magnet 4 geschoben wird. Seitenwände der Aussparung sind dabei mit Haltemitteln versehen, welche den Magneten 4 in seiner Einbaulage sichern.

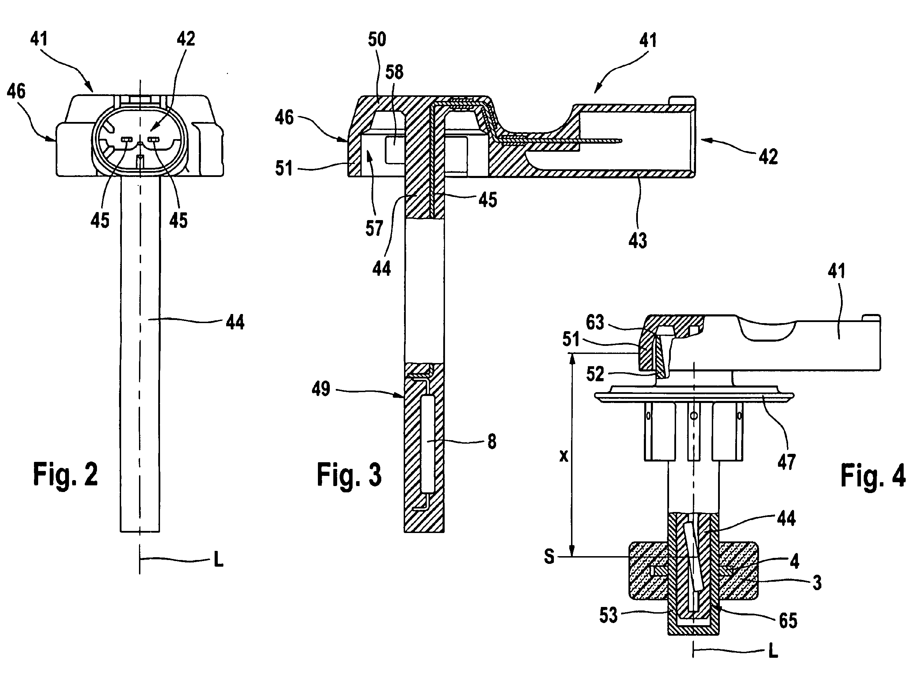

Fig. 2 bis 8 zeigen Ausschnitte und Bauteile eines ersten Ausführungsbeispiels eines erfindungsgemäßen Ausgleichsbehälters 40 in verschiedenen Ansichten. Da sich der erfindungsgemäße Ausgleichsbehälter 40 lediglich durch seine Schalteinheit 41 und deren Anordnung am Gehäuse zum bekannte Ausgleichsbehälter gemäß Fig. 1 unterscheidet, sind lediglich die erfindungswesentlichen Bestandteile des Ausgleichsbehälters 40 dargestellt, welche im Folgenden beschrieben werden. Gleiche Bauteile werden mit gleichen Bezugszeichen versehen und auf eine wiederholte Beschreibung wird verzichtet.

Fig. 2 und 3 zeigen eine Schalteinheit 41 des Ausgleichsbehälters 40 in Vorder- und Seitenansicht, wobei Fig. 3 teilweise geschnitten dargestellt ist.

Die Schalteinheit 41 umfasst einen Steckverbinder 42 mit einem Gehäuse 43 sowie einen Kontaktträger 44 und ist, um die Montage zu erleichtern und die Herstellung der Schalteinheit 41 zu vereinfachen, einteilig aus einem Kunststoffwerkstoff ausgebildet. Kontaktfahnen 45, an welchen der Reed-Schalter 8 als Schaltelement befestigt ist, sowie andere Bauteile, wie beispielsweise Widerstände, sind in den Kontaktträger 44 eingespritzt.

Der Reed-Schalter 8 als Schaltelement stellt eine kostengünstige Variante des Sensor- oder Schaltelementes dar, das jedoch auch durch ein anderes Sensor- oder Schaltelement ersetzbar ist.

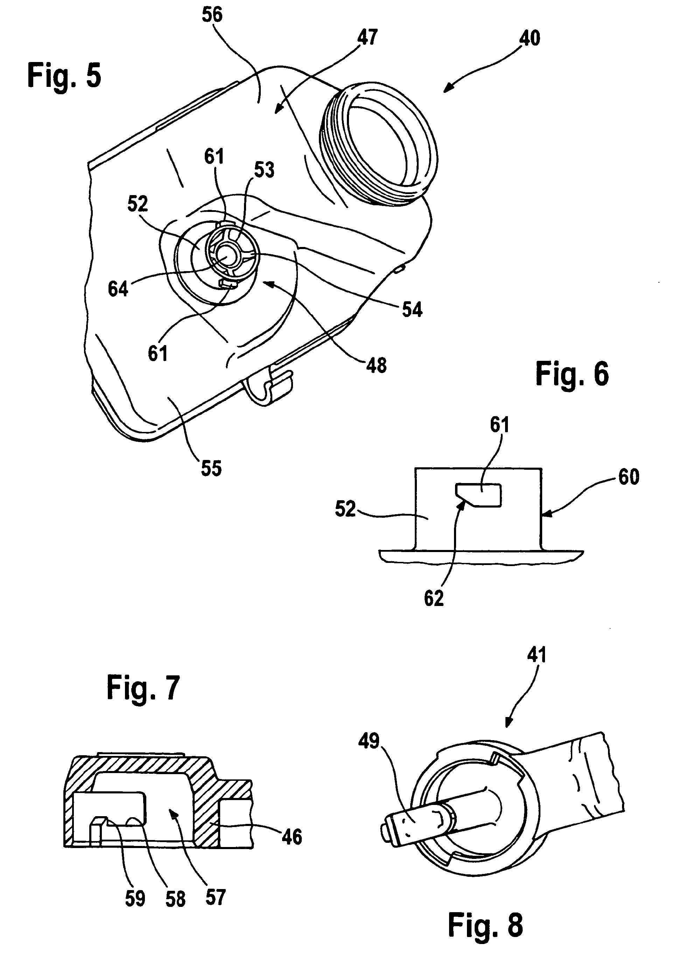

Fig. 3 zeigt die Anordnung des Reed-Schalters 8 nur schematisch. So ist es denkbar, wie in Fig. 8 gezeigt, den Reed-Schalter 8 in einer Ausnehmung des Kontaktträgers 44 anzuordnen und darin mit den Kontaktfahnen 45 zu befestigen. Um den Reed-Schalter 8 zu schützen, kann dieser in das Material des Kontaktträgers 44 eingebetet sein, wie in Fig. 3 dargestellt ist. Hierzu kann der Kontaktträger 44 beispielsweise im Bereich des Reed-Schalters 8 mit dem gleichen Material umspritzt werden bzw. kann ein Abschnitt 49 des Kontaktträgers 44, der in ein Führungsrohr 53 des Ausgleichsbehälters 40 hineinragt, nach Befestigung des Reed-Schalters 8 umhüllt werden.

Um eine lösbare Verbindung der Schalteinheit 41 mit einem Gehäuse 47 des Ausgleichsbehälters 40 zu ermöglichen, weist der Kontaktträger 44 einen topfförmigen Abschnitt 46 auf, welcher mit einem am Gehäuse 47 ausgebildeten Komplementärabschnitt 48 zusammenwirkt. Wie insbesondere Fig. 3 zu entnehmen ist, erstreckt sich der den Reed-Schalter 8 tragende Abschnitt 49 des Kontaktträgers 44 mittig von einem Boden 50 des topfförmigen Abschnittes 46 und das Gehäuse 43 des Steckverbinders 42 ist senkrecht in Bezug auf eine Längsachse L der Schalteinheit 41 an dem Kontaktträger 44 angeordnet.

Dabei kann eine separate Montage des Steckverbinders 42 an den Ausgleichsbehälter 40 dadurch entfallen, dass das Gehäuse 43 des Steckverbinders 42 an eine Wandung 51 des topfförmigen Abschnittes 46 angeformt ist.

Fig. 4 zeigt die teilweise geschnittene Schalteinheit 41 nach der Montage in das Gehäuse 47 des Ausgleichsbehälters 40, der in Fig. 5 räumlich dargestellt ist. Wie ersichtlich ist, ist der Komplementärabschnitt 48 als ringförmiger Vorsprung 52 ausgebildet, innerhalb dessen das Führungsrohr 53 vorgesehen ist. Das Führungsrohr 53 und der ringförmige Vorsprung 52 sind konzentrisch angeordnet, wobei zur Verstärkung des Ausgleichsbehälters 40 im Bereich des ringförmigen Vorsprunges 52 zwischen dem ringförmigen Vorsprung 52 und dem Führungsrohr 53 Verstärkungsrippen 54 vorgesehen sind.

Eine weitere Stabilisierung der Schalteinheit 41 wird über eine Passung 65 im Innenbereich des Führungsrohres 53 - nämlich zwischen dem Abschnitt 49 des Kontaktträgers 44 und einer Innenseite des Führungsrohres 53 gewährleistet.

Um das Packaging des Ausgleichsbehälters 40 zu optimieren, ist der ringförmige Vorsprung 52 in einem Bereich 55 des Gehäuses 47 angeordnet, welcher im Vergleich zum restlichen Bereich 56 des Gehäuses 47 in Richtung Behälterinnenraum versetzt vorgesehen ist. Somit steht die Schalteinheit 41 nicht über das Gehäuse 47 hervor und kann weder beim Transport noch im eingebauten Zustand des Ausgleichsbehälters 40 hinderlich sein. Ferner kann durch die gezeigte Gehäusegeometrie vermieden werden, dass die Schalteinheit 41 in einer falschen Lage - beispielsweise um 180° in Bezug auf die Längsachse L verdreht - eingebaut wird.

Die lösbare Verbindung des Kontaktträgers 44 mit dem Komplementärabschnitt 48 ist als Bajonettverbindung ausgestaltet, welche auf einer Innenseite 57 des topfförmigen Abschnittes 46 zwei diametral gegenüberliegende Ausbrüche 58 mit Hinterscheidungen 59 und auf einer Außenseite 60 des ringförmigen Vorsprunges 52 zwei diametral gegenüberliegende Rippen 61 umfasst. Diese Verbindung erlaubt eine einfache Austauschbarkeit der Schalteinheit 41 ohne die Verwendung eines Werkzeuges, wobei die Hinterscheidungen 59 ein ungewolltes Lösen der Verbindung verhindern.
Hierbei ist es möglich, auch andere rastende Verbindungen vorzusehen, wie beispielsweise eine Schnapp-Verbindung mit federnden Schnapp-Elementen und entsprechenden Elementen zum Einschnappen der Schnapp-Elemente.

Fig. 6 zeigt den ringförmigen Vorsprung 52 als Ausschnitt. Wie ersichtlich ist, weisen die Rippen 61 eine im Wesentlichen rechteckige Form auf, wobei an einer Ecke ein schräge Fläche 62 vorgesehen ist, welche mit der Hinterscheidung 59 zusammenwirkt und ein Einführen der Rippe 61 in den Ausbruch 58 ermöglicht.

Der ringförmige Vorsprung 52 ist federnd ausgebildet und ein Rand 63 des ringförmigen Vorsprunges 52 liegt dichtend an der Innenseite 57 des topfförmigen Abschnittes 46 an. Hierdurch kommt dem ringförmigen Vorsprung 52 eine Doppelfunktion zu, da der Vorsprung 52 einerseits einen Innenraum 64 des Führungsrohres 53 gegen ein Eindringen von Spritzwasser schützt und andererseits die Ausbrüche 58 gegen die Rippen 61 der Bajonettverbindung drückt. Durch die gezeigte Ausgestaltung der Rippen 61 und der Ausbrüche 58 ist die Eindrehrichtung der Schalteinheit 41 festgelegt und erfolgt im Uhrzeigersinn bis zum Einrasten der Bajonettverbindung. Bei einer spiegelverkehrten Ausgestaltung erfolgt das Eindrehen gegen den Uhrzeigersinn.
Die Demontage der Schalteinheit 41 erfolgt durch Eindrücken der Schalteinheit 41 gegen den Rand 63 des ringförmigen Vorsprunges 52 und Drehen gegen den Uhrzeigersinn bis sich die Bajonettverbindung löst.

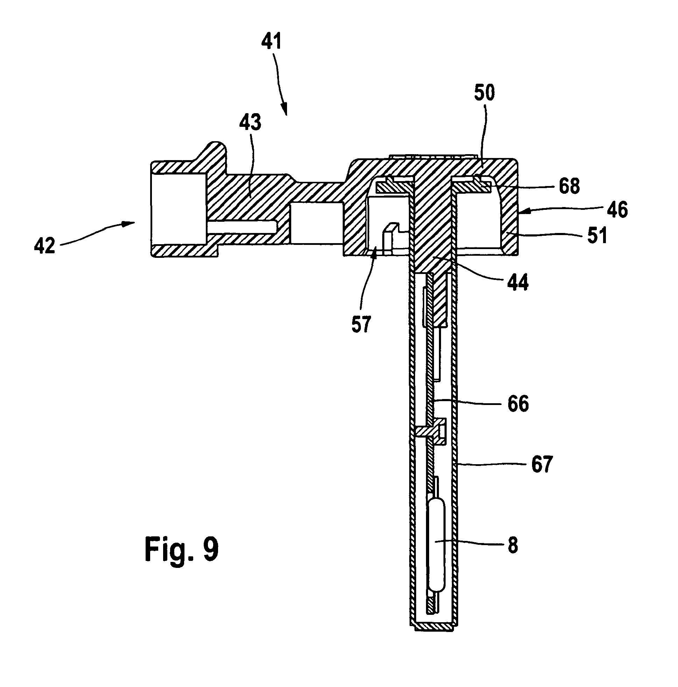

Fig. 9 zeigt eine alternative Befestigung des Reed-Schalters 8 an einem zweiten Ausführungsbeispiel eines Ausgleichsbehälters 40. Diese sieht vor, den Reed-Schalter 8 auf einer Leiterplatte 66 anzuordnen, welche am Kontaktträger 44 befestigt vorgesehen ist. Die Leiterplatte 66 sowie ein Teil des Kontaktträgers 44 sind zum Schutz von einer rohrförmigen Hülle 67 umgeben, welche mit einem Flansch 68 im Bereich des Bodens 50 des topfförmigen Abschnittes 46 an dem Kontaktträger 44 angeschweißt ist. Ein in Richtung Behälterinnenraum zeigendes Ende der Hülle ist verschlossen vorgesehen und die Hülle 28 ragt bei dieser Ausführungsform der Schalteinheit 41 in das Führungsrohr 53 hinein.

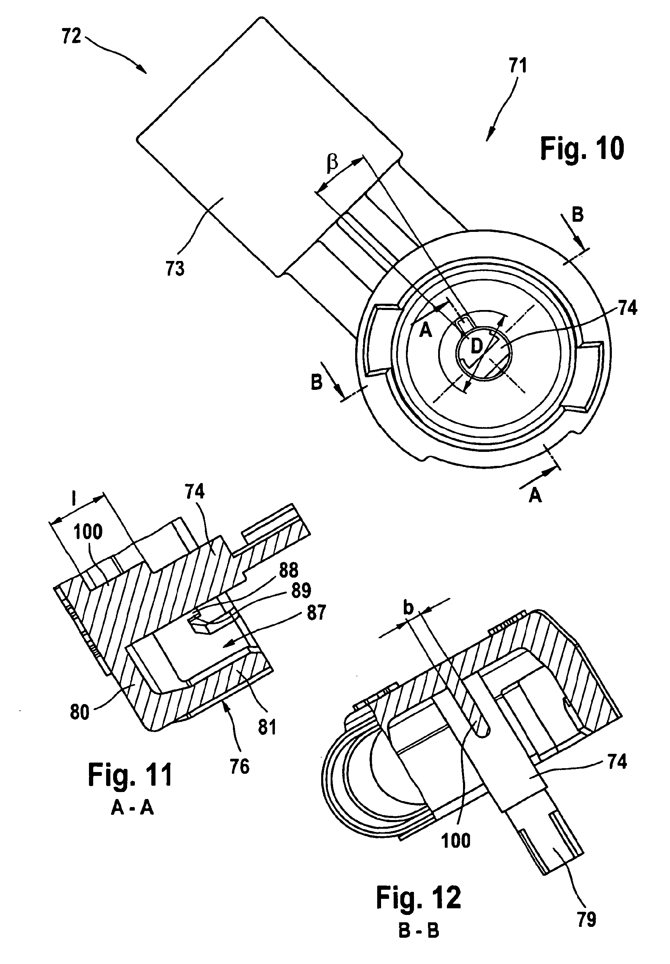

Den Fig. 10 bis 14 ist ein drittes Ausführungsbeispiel eines erfindungsgemäßen Ausgleichsbehälters 70 zu entnehmen. Die Funktion sowie der grundsätzliche Aufbau entspricht Funktion sowie Aufbau des ersten Ausführungsbeispiels, daher wird ausdrücklich auf die obige Beschreibung des ersten Ausführungsbeispiels verwiesen, wobei die Bezugszeichen jeweils um 30 erhöht wurden.

Das dritte Ausführungsbeispiel weist vorteilhafte Mittel zur Vermeidung einer fehlerhaften Montage einer Schalteinheit 71 in ein Gehäuse 73 des Ausgleichsbehälters 70 auf, welche den Fig. 10 bis 12 zu entnehmen ist.

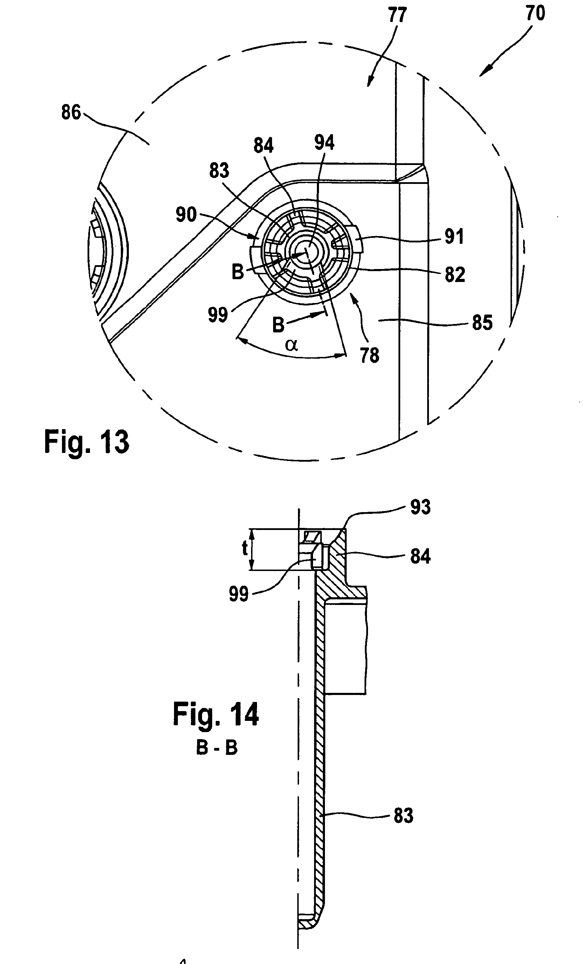

Fig. 13 und 14 zeigen jeweils einen Ausschnitt des Gehäuses 77 des Ausgleichsbehälters 70. Zur Vermeidung einer Fehlmontage der Schalteinheit 71 ist zwischen einem Vorsprung 82 und einem Führungsrohr 83 des Gehäuses 77 im Bereich zwischen zwei Verstärkungsrippen 84 eine Ausnehmung 99 vorgesehen, welche sich über einen Winkel α erstreckt und eine Tiefe t aufweist.

Als Komplementärelement zur Ausnehmung 99 weist die Schalteinheit 77 eine Rippe 100 auf, welche sich mit einer Länge l ausgehend vom Boden 80 eines topfförmigen Abschnittes 76 der Schalteinheit 71 an einem Kontaktträger 74 entlang erstreckt. Weiterhin definiert sich die Rippe 100 über einen Durchmesser D, eine Breite b sowie einen Positionswinkel β, wie aus den einzelnen Darstellungen gemäß den Fig. 10 bis 12 deutlich hervorgeht.

Bei der Montage wird die Schalteinheit 71 mit der Rippe 100 in die Ausnehmung 99 eingeführt und wie zum ersten Ausführungsbeispiel beschriebenen durch Links- oder Rechtsdrehen durch Rippen 91 und Ausbrüche 88 eingerastet. Dabei sind die Länge l sowie der Durchmesser D der Rippe 100 an die Tiefe t sowie eine radiale Ausdehnung der Ausnehmung 99 angepasst. Ferner erlaubt der Winkel α der Ausnehmung 99 die notwendige Drehung der Schalteinheit 71 bis zum Einrasten der Rippen 91 in die Ausbrüche 88.

Zusätzlich kann das Rastermaß x derart gewählt werden, dass der Schaltpunkt S bei unterschiedlichen Rastermaßen x so variiert, dass eine Schaltprüfung negativ verläuft, falls eine Schalteinheit 41, 71 mit falschem Rastermaß x montiert wurde. Hierdurch ergibt sich eine Möglichkeit, eine Montage einer Schalteinheit 41,71 mit falschem Rastermaß x zu vermeiden.

Ebenso ist es im Rahmen der Erfindung denkbar, die beschriebenen Mittel zur Vermeidung einer fehlerhaften Montage einer Schalteinheit, d.h. Ausnehmung 99 und Rippe 100, bei dem gemäß Fig. 9 beschriebenen, zweiten Ausführungsbeispiel vorzusehen. Im Unterschied zum dritten Ausführungsbeispiel muss die Rippe 100 an der Hülse 67 angeordnet werden. Dabei ist die korrekte Positionierung der Hülse 67 an der Schalteinheit sicherzustellen.

Der erfindungsgemäße Ausgleichsbehälter 40, 70 erlaubt eine einfache und schnelle Montage der Schalteinheit 41, 71 am Gehäuse 47, 77 des Ausgleichsbehälters 40, 70, wodurch aufwendige Montageschritte entfallen können. Die Montage der Schalteinheit 41, 71 kann entweder im Gehäuseoberteil oder im Gehäuseunterteil des Ausgleichsbehälters 40, 70 erfolgen.

Ferner gestattet die lösbare Verbindung des topfförmigen Abschnittes 52, 82 des Kontaktträgers 44, 74 und des Komplementärabschnitts 48, 78 des Gehäuses 47, 77 eine genaue Positionierung des Sensor- oder Schaltelementes 8 und damit eine exakte Positionierung des Schaltpunktes S.

Weitere Vorteile der Erfindung:
- Durch die Verwendung eines hinsichtlich des Magnetfeldes homogenen Ringmagneten 4 wird ein genaueres Schaltverhalten erzielt, da Flachmagnete dagegen kein homogenes Magnetfeld haben.
- Ein kostengünstiger Reed-Schalter 8 mit geöffneten Kontakten kann auch als ÖFFNER - Schaltprinzip eingesetzt werden, ohne Designänderungen am Ausgleichsbehälter 40, 70, die das Packaging betreffen. Bei einer waagerecht eingesteckten Schalteinheit muss entweder ein teurer Reed-Schalter mit normal geschlossenen Kontakten eingesetzt werden, oder die Schalteinheit muss statt unten, oben im Behälter eingesteckt werden.
- Unterschiedlichste Varianten erfordern nur einen Einheits-Schwimmer 3 mit Einheitsringmagnet 4.
- Die Variantenvielfalt wird durch Rastermaße x und variable Einbaulagen im Ausgleichsbehälter 40, 70 erzielt.
- Durch entsprechende austauschbare Einsätze im Werkzeug können unterschiedliche Geometrien der Steckverbinder 42, 72 und der Kontaktfahnen 45 realisiert werden.
- Es besteht in wesentlicher Packaging-Vorteil im Fahrzeug gegenüber einer waagerecht eingesteckten Schalteinheit.

### Bezugszeichenliste

| | |
|---|---|
| 1 | Ausgleichsbehälter |
| 2 | Führungsrohr |
| 3 | Schwimmer |
| 4 | Magnet |
| 5 | Boden |
| 6 | Rohrstutzen |
| 7 | Kontaktträger |
| 8 | Reed-Schalter |
| 9 | Rand |
| | |
| 13 | Schlitz |
| 14 | Radialvorsprung |
| 15 | Rippe |
| 16 | Boden |
| 17 | Hohlraum |
| 18 | Seitenwand |
| 19 | Wand |
| 20 | Wand |
| 21 | Fahne |
| 22 | Rand |
| 23 | Deckel |
| 24 | Grundplatte |
| 25 | Steckverbindergehäuse |
| 26 | Ausnehmung |
| 27 | Kontaktstift |
| 28 | Ende |
| 29 | Leitung |
| 30 | Vorsprung |
| 31 | Ausnehmung |
| 32 | Gehäuseoberteil |
| 33 | Gehäuseunterteil |
| | |
| 40 | Ausgleichsbehälter |
| 41 | Schalteinheit |
| 42 | Steckverbinder |
| 43 | Gehäuse |
| 44 | Kontaktträger |
| 45 | Kontaktfahne |
| 46 | Abschnitt |
| 47 | Gehäuse |
| 48 | Komplementärabschnitt |
| 49 | Abschnitt |
| 50 | Boden |
| 51 | Wandung |
| 52 | Vorsprung |
| 53 | Führungsrohr |
| 54 | Verstärkungsrippen |
| 55 | Bereich |
| 56 | Bereich |
| 57 | Innenseite |
| 58 | Ausbruch |
| 59 | Hinterschneidung |
| 60 | Außenseite |
| 61 | Rippe |
| 62 | Fläche |
| 63 | Rand |
| 64 | Innenraum |
| 65 | Passung |
| 66 | Leiterplatte |
| 67 | Hülle |
| 68 | Flansch |
| | |
| 70 | Ausgleichsbehälter |
| 71 | Schalteinheit |
| 72 | Steckverbinder |
| 73 | Gehäuse |
| 74 | Kontaktträger |
| 76 | Abschnitt |
| 77 | Gehäuse |
| 78 | Komplementärabschnitt |
| 79 | Abschnitt |
| 80 | Boden |
| 81 | Wandung |
| 82 | Vorsprung |
| 83 | Führungsrohr |
| 84 | Verstärkungsrippen |
| 85 | Bereich |
| 86 | Bereich |
| 87 | Innenseite |
| 88 | Ausbruch |
| 89 | Hinterschneidung |
| 90 | Außenseite |
| 91 | Rippe |
| 92 | Fläche |
| 93 | Rand |
| 94 | Innenraum |
| | |
| 99 | Ausnehmung |
| 100 | Rippe |
| | |
| b | Breite |
| D | Durchmesser |
| l | Länge |
| L | Längsachse |
| S | Schaltpunkt |
| t | Tiefe |
| x | Rastermaß |
| α | Winkel |
| β | Positionswinkel |

## Patentansprüche

1. Ausgleichsbehälter (40,70) für eine hydraulische Kraftfahrzeugbremsanlage
- mit einem Gehäuse (47,77) umfassend ein Gehäuseoberteil und ein Gehäuseunterteil und
- mit einer Vorrichtung zum Überwachen des Behälterfüllstandes des Ausgleichsbehälters (40,70) umfassend
- eine am Gehäuse (47,77) befestigte Schalteinheit (41,71) mit einem Steckverbinder (42,72) und einem Kontaktträger (44,74), welcher mit einem Abschnitt (49,79) in ein Führungsrohr (53,83) hineinragt, das sich in einen Behälterinnenraum erstreckt,
- sowie ein Sensor- oder Schaltelement, welches am Kontaktträger (44,74) im Bereich des Führungsrohrs (53,83) angeordnet ist und das mittels eines Gebers (4) in einem Schaltpunkt (S), an welchem die Schalteinheit (41,71) ein Signal für eine elektronische Steuereinheit generiert, schaltbar ist,
**dadurch gekennzeichnet, dass** der Kontaktträger (44,74) einen topfförmigen Abschnitt (46,76) aufweist, welcher mit einem am Gehäuse (47,77) ausgebildeten Komplementärabschnitt (48,78) zusammenwirkt, um eine lösbare Verbindung der Schalteinheit (41,71) mit dem Gehäuse (47,77) zu ermöglichen, wobei sich der das Sensor- oder Schaltelement (8) tragende Abschnitt (49,79) des Kontaktträgers (44,74) mittig von einem Boden (50,80) des topfförmigen Abschnittes (46,76) erstreckt und ein Gehäuse (43,73) des Steckverbinders (42,72) senkrecht in Bezug auf eine Längsachse (L) der Schalteinheit (41,71) an dem Kontaktträger (44,74) angeordnet ist.

2. Ausgleichsbehälter (40,70) nach Anspruch 1, **dadurch gekennzeichnet, dass** das Gehäuse (43,73) des Steckverbinders (42,72) an eine Wandung (51,81) des topfförmigen Abschnittes (46,76) angeformt ist.

3. Ausgleichsbehälter (40,70) nach Anspruch 1 oder 2, **dadurch gekennzeichnet, dass** der am Gehäuse (47,77) ausgebildete Komplementärabschnitt (48,78) als ringförmiger Vorsprung (52,82) ausgebildet ist, innerhalb dessen das Führungsrohr (53,83) vorgesehen ist, wobei das Führungsrohr (53,83) und der ringförmige Vorsprung (52,82) konzentrisch angeordnet sind.

4. Ausgleichsbehälter (40,70) nach Anspruch 3, **dadurch gekennzeichnet, dass** der ringförmige Vorsprung (52,82) in einem Bereich (55,85) des Gehäuses (47,77) angeordnet ist, welcher im Vergleich zum restlichen Bereich (56,86) des Gehäuses (47,77) in Richtung Behälterinnenraum versetzt vorgesehen ist.

5. Ausgleichsbehälter (40) nach Anspruch 3 oder 4, **dadurch gekennzeichnet, dass** die lösbare Verbindung des Kontaktträgers (44,74) mit dem Komplementärabschnitt (48,78) als Bajonettverbindung ausgestaltet ist, welche auf einer Innenseite (57,87) des topfförmigen Abschnittes (46,76) zwei diametral gegenüberliegende Ausbrüche (58,88) mit Hinterscheidungen (59,89) und auf einer Außenseite (60,90) des ringförmigen Vorsprunges (52,82) zwei diametral gegenüberliegende Rippen (61,91) umfasst.

6. Ausgleichsbehälter (40,70) nach Anspruch 5, **dadurch gekennzeichnet, dass** der ringförmige Vorsprung (52,82) federnd ausgebildet ist.

7. Ausgleichsbehälter (40,70) nach Anspruch 6, **dadurch gekennzeichnet, dass** ein Rand (63,93) des ringförmigen Vorsprunges (52,82) dichtend an der Innenseite (57,87) des topfförmigen Abschnittes (46,76) anliegt.

8. Ausgleichsbehälter (40,70) nach Anspruch 7, **dadurch gekennzeichnet, dass** zwischen dem ringförmigen Vorsprung (52,82) und dem Führungsrohr (53,83) Verstärkungsrippen (54,84) vorgesehen sind.

9. Ausgleichsbehälter (40,70) nach Anspruch 8, **dadurch gekennzeichnet, dass** der Kontaktträger (44,74) mit dem Steckverbinder (42,82) einteilig aus Kunststoff ausgebildet ist.

10. Ausgleichsbehälter (40,70) nach Anspruch 9, **dadurch gekennzeichnet, dass** Kontaktfahnen (45) in den Kontaktträger (44,74) eingespritzt vorgesehen sind.

11. Ausgleichsbehälter (40,70) nach einem der vorangegangenen Ansprüche, **dadurch gekennzeichnet, dass** das Sensor- oder Schaltelement ein Reed-Schalter (8) ist.

12. Ausgleichsbehälter (40,70) nach Anspruch 11, **dadurch gekennzeichnet, dass** der Reed-Schalter (8) an Kontaktfahnen (45) befestigt und in einer Ausnehmung des Kontaktträgers (44,74) aufgenommen ist.

13. Ausgleichsbehälter (40,70) nach Anspruch 11, **dadurch gekennzeichnet, dass** der Reed-Schalter (8) an einer Leiterplatte (66) befestigt ist, welche am Kontaktträger (44,74) angeordnet ist.

14. Ausgleichsbehälter (40,70) nach Anspruch 12 oder 13, **dadurch gekennzeichnet, dass** der Reed-Schalter (8) in das Material des Kontaktträgers (44,74) eingebettet vorgesehen ist.

15. Ausgleichsbehälter (40,70) nach Anspruch 13, **dadurch gekennzeichnet, dass** die Leiterplatte (66) sowie ein Teil des Kontaktträgers (44,74) von einer röhrförmigen Hülle (67) umgeben ist, deren Flansch (68) im Bereich des Bodens (50,80) des topfförmigen Abschnittes (46,76) an dem Kontaktträger (44,74) angeschweißt ist.

16. Ausgleichsbehälter (70) nach einem der vorangegangenen Ansprüche, **dadurch gekennzeichnet, dass** Mittel zur Vermeidung einer fehlerhaften Montage der Schalteinheit (71) vorgesehen sind.

17. Ausgleichsbehälter (40,70) nach Anspruch 16, **dadurch gekennzeichnet, dass** die Mittel als Ausnehmung (99) im Gehäuse (77) und als Rippe (100) an der Schalteinheit (71) vorgesehen sind, wobei die Ausnehmung (99) im Bereich des Führungsrohres (83) angeordnet ist und sich die Rippe (100) vom Boden (80) des topfförmigen Abschnittes (76) entlang des Kontaktträgers (74) erstreckt.

## Claims

1. Equalizing container (40, 70) for a hydraulic motor-vehicle brake system
- having a housing (47, 77) comprising a housing upper part and a housing lower part, and
- having an apparatus for monitoring the container filling level of the equalizing container (40, 70) comprising
- a switching unit (41, 71) which is fastened to the housing (47, 77) and has a plug-in connector (42, 72) and a contact carrier (44, 74) which projects with a section (49, 79) into a guide tube (53, 83) which extends into a container interior space,
- and a sensor or switching element which is arranged on the contact carrier (44, 74) in the region of the guide tube (53, 83) and which can be switched by means of a probe (4) at a switching point (S), at which the switching unit (41, 71) generates a signal for an electronic control unit,
**characterized in that** the contact carrier (44, 74) has a cup-shaped section (46, 76) which interacts with a complementary section (48, 78) which is formed on the housing (47, 77), in order to make a releasable connection of the switching unit (41, 71) to the housing (47, 77) possible, that section (49, 79) of the contact carrier (44, 74) which carries the sensor or switching element (8) extending centrally from a bottom (50, 80) of the cup-shaped section (46, 76), and a housing (43, 73) of the plug-in connector (42, 72) being arranged on the contact carrier (44, 74) perpendicularly in relation to a longitudinal axis (L) of the switching unit (41, 71).

2. Equalizing container (40, 70) according to Claim 1, **characterized in that** the housing (43, 73) of the plug-in connector (42, 72) is moulded integrally onto a wall (51, 81) of the cup-shaped section (46, 76).

3. Equalizing container (40, 70) according to Claim 1 or 2, **characterized in that** the complementary section (48, 78) which is formed on the housing (47, 77) is configured as an annular projection (52, 82), within which the guide tube (53, 83) is provided, the guide tube (53, 83) and the annular projection (52, 82) being arranged concentrically.

4. Equalizing container (40, 70) according to Claim 3, **characterized in that** the annular projection (52, 82) is arranged in a region (55, 85) of the housing (47, 77), which region (55, 85) is provided offset in the direction of the container interior space in comparison with the remaining region (56, 86) of the housing (47, 77).

5. Equalizing container (40) according to Claim 3 or 4, **characterized in that** the releasable connection of the contact carrier (44, 74) to the complementary section (48, 78) is configured as a bayonet connection which comprises two cut-outs (58, 88) which lie diametrically opposite one another with undercuts (59, 89) on an inner side (57, 87) of the cup-shaped section (46, 76) and two ribs (61, 91) which lie diametrically opposite one another on an outer side (60, 90) of the annular projection (52, 82).

6. Equalizing container (40, 70) according to Claim 5, **characterized in that** the annular projection (52, 82) is of resilient configuration.

7. Equalizing container (40, 70) according to Claim 6, **characterized in that** an edge (63, 93) of the annular projection (52, 82) bears sealingly against the inner side (57, 87) of the cup-shaped section (46, 76).

8. Equalizing container (40, 70) according to Claim 7, **characterized in that** reinforcing ribs (54, 84) are provided between the annular projection (52, 82) and the guide tube (53, 83).

9. Equalizing container (40, 70) according to Claim 8, **characterized in that** the contact carrier (44, 74) is formed in one piece with the plug-in connector (42, 82) from plastic.

10. Equalizing container (40, 70) according to Claim 9, **characterized in that** contact tabs (45) are provided such that they are moulded into the contact carrier (44, 74).

11. Equalizing container (40, 70) according to one of the preceding claims, **characterized in that** the sensor or switching element is a reed switch (8).

12. Equalizing container (40, 70) according to Claim 11, **characterized in that** the reed switch (8) is fastened to contact tabs (45) and is received in a recess of the contact carrier (44, 74).

13. Equalizing container (40, 70) according to Claim 11, **characterized in that** the reed switch (8) is fastened to a printed circuit board (66) which is arranged on the contact carrier (44, 74).

14. Equalizing container (40, 70) according to Claim 12 or 13, **characterized in that** the reed switch (8) is provided embedded into the material of the contact carrier (44, 74).

15. Equalizing container (40, 70) according to Claim 13, **characterized in that** the printed circuit board (66) and a part of the contact carrier (44, 74) are surrounded by a tubular cover (67), the flange (68) of which is welded to the contact carrier (44, 74) in the region of the bottom (50, 80) of the cup-shaped section (46, 76).

16. Equalizing container (70) according to one of the preceding claims, **characterized in that** means for avoiding incorrect mounting of the switching unit (71) are provided.

17. Equalizing container (40, 70) according to Claim 16, **characterized in that** the means are provided as a recess (99) in the housing (77) and as a rib (100) on the switching unit (71), the recess (99) being arranged in the region of the guide tube (83) and the rib (100) extending from the bottom (80) of the cup-shaped section (76) along the contact carrier (74).

## Revendications

1. Récipient de compensation (40, 70) pour installation hydraulique de freinage pour véhicule automobile, comprenant
- un boîtier (47, 77) comprenant une partie supérieure de boîtier et une partie inférieure de boîtier et
- un dispositif de surveillance de l'état de remplissage du récipient de compensation (40, 70), comprenant
- une unité de commutation (41, 71) fixée sur le boîtier (47, 77) avec un connecteur à fiche (42, 72) et un support de contacts (44, 74) qui pénètre par une portion (49, 79) dans un tube de guidage (53, 83) qui s'étend dans un espace interne du récipient,
- ainsi qu'un élément de capteur ou de commutation qui est disposé sur le support de contacts (44, 74) dans la région du tube de guidage (53, 83) et qui peut être commuté au moyen d'un capteur (4) dans un point de commutation (S), auquel l'unité de commutation (41, 71) génère un signal pour une unité de commande électronique,
**caractérisé en ce que** le support de contacts (44, 74) présente une portion (46, 76) en forme de pot, qui coopère avec une portion complémentaire (48, 78) réalisée sur le boîtier (47, 77), afin de permettre une connexion amovible de l'unité de commutation (41, 71) avec le boîtier (47, 77), la portion (49, 79) du support de contacts (44, 74) portant l'élément de capteur ou l'élément de commutation (8) s'étendant centralement depuis un fond (50, 80) de la portion (46, 76) en forme de pot et un boîtier (43, 73) du connecteur à fiche (42, 72) étant disposé perpendiculairement par rapport à un axe longitudinal (L) de l'unité de commutation (41, 71) sur le support de contacts (44, 74).

2. Récipient de compensation (40, 70) selon la revendication 1, **caractérisé en ce que** le boîtier (43, 73) du connecteur à fiche (42, 72) est façonné au niveau d'une paroi (51, 81) de la portion (46, 76) en forme de pot.

3. Récipient de compensation (40, 70) selon la revendication 1 ou 2, **caractérisé en ce que** la portion complémentaire (48, 78) réalisée sur le boîtier (47, 77) est réalisée sous forme de saillie annulaire (52, 82), à l'intérieur de laquelle le tube de guidage (53, 83) est prévu, le tube de guidage (53, 83) et la saillie annulaire (52, 82) étant disposés concentriquement.

4. Récipient de compensation (40, 70) selon la revendication 3, **caractérisé en ce que** la saillie annulaire (52, 82) est disposée dans une région (55, 85) du boîtier (47, 77) qui est prévue de manière décalée par rapport au reste de la région (56, 86) du boîtier (47, 77) dans la direction de l'espace interne du récipient.

5. Récipient de compensation (40) selon la revendication 3 ou 4, **caractérisé en ce que** la connexion amovible du support de contacts (44, 74) à la portion complémentaire (48, 78) est configurée sous forme de connexion à baïonnette, qui comprend, sur un côté intérieur (57, 87) de la portion (46, 76) en forme de pot, deux orifices (58, 88) diamétralement opposés avec des contre-dépouilles (59, 89) et, sur un côté extérieur (60, 90) de la saillie annulaire (52, 82), deux nervures (61, 91) diamétralement opposées.

6. Récipient de compensation (40, 70) selon la revendication 5, **caractérisé en ce que** la saillie annulaire (52, 82) est réalisée sous forme élastique.

7. Récipient de compensation (40, 70) selon la revendication 6, **caractérisé en ce qu'**un bord (63, 93) de la saillie annulaire (52, 82) s'applique hermétiquement contre le côté intérieur (57, 87) de la portion (46, 76) en forme de pot.

8. Récipient de compensation (40, 70) selon la revendication 7, **caractérisé en ce qu'**entre la saillie annulaire (52, 82) et le tube de guidage (53, 83) sont prévues des nervures de renforcement (54, 84).

9. Récipient de compensation (40, 70) selon la revendication 8, **caractérisé en ce que** le support de contacts (44, 74) est réalisé d'une seule pièce en plastique avec le connecteur à fiche (42, 72).

10. Récipient de compensation (40, 70) selon la revendication 9, **caractérisé en ce que** des fanions de contact (45) sont prévus sous forme moulée par injection dans le support de contacts (44, 74).

11. Récipient de compensation (40, 70) selon l'une quelconque des revendications précédentes, **caractérisé en ce que** l'élément de capteur ou de commutation est un commutateur à tiges (8).

12. Récipient de compensation (40, 70) selon la revendication 11, **caractérisé en ce que** le commutateur à tiges (8) est fixé sur des fanions de contact (45) et est reçu dans un évidement du support de contacts (44, 74).

13. Récipient de compensation (40, 70) selon la revendication 11, **caractérisé en ce que** le commutateur à tiges (8) est fixé sur une carte à circuits imprimés (66) qui est disposée sur le support de contacts (44, 74).

14. Récipient de compensation (40, 70) selon la revendication 12 ou 13, **caractérisé en ce que** le commutateur à tiges (8) est prévu sous forme noyée dans le matériau du support de contacts (44, 74).

15. Récipient de compensation (40, 70) selon la revendication 13, **caractérisé en ce que** la carte à circuits imprimés (66) ainsi qu'une partie du support de contacts (44, 74) est entourée par un manchon tubulaire (67) dont la bride (68) est soudée dans la région du fond (50, 80) de la portion (46, 76) en forme de pot sur le support de contacts (44, 74).

16. Récipient de compensation (70) selon l'une quelconque des revendications précédentes, **caractérisé en ce que** des moyens sont prévus pour éviter un mauvais montage de l'unité de commutation (71).

17. Récipient de compensation (40, 70) selon la revendication 16, **caractérisé en ce que** les moyens sont prévus sous forme d'évidement (99) dans le boîtier (77) et sous forme de nervure (100) sur l'unité de commutation (71), l'évidement (99) étant disposé dans la région du tube de guidage (83) et la nervure (100) s'étendant depuis le fond (80) de la portion (76) en forme de pot le long du support de contacts (74).
